(19) Europäisches Patentamt
European Patent Office
Office européen des brevets

(11) **EP 4 516 755 A1**

(12) **EUROPEAN PATENT APPLICATION**
published in accordance with Art. 153(4) EPC

(43) Date of publication:
**05.03.2025 Bulletin 2025/10**

(21) Application number: **23796203.0**

(22) Date of filing: **19.04.2023**

(51) International Patent Classification (IPC):
***C03C 25/1065*** (2018.01)      ***G02B 6/44*** (2006.01)

(52) Cooperative Patent Classification (CPC):
**C03C 25/1065; G02B 6/44**

(86) International application number:
**PCT/JP2023/015622**

(87) International publication number:
**WO 2023/210461 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 US 202263335224 P**

(71) Applicant: **Fujikura Ltd.**
**Tokyo 135-8512 (JP)**

(72) Inventors:
• **MURATA Akira**
**Sakura-shi, Chiba 285-8550 (JP)**
• **MIYATA Miku**
**Sakura-shi, Chiba 285-8550 (JP)**

(74) Representative: **Plasseraud IP**
**104 Rue de Richelieu**
**CS92104**
**75080 Paris Cedex 02 (FR)**

(54) **OPTICAL FIBER WIRE, AND PRODUCTION METHOD FOR OPTICAL FIBER RIBBON**

(57)      An optical fiber element wire includes a bare wire part including a core and a cladding and extending in an axial direction, a primary layer covering the bare wire part, and a secondary layer covering the primary layer. A Young's modulus of the primary layer is within a range of 0.10 to 0.45 MPa, a pull-out force required to pull the bare wire part out of the primary layer in the axial direction is within a range of 0.6 to 1.2 N/mm, and, when a point load is applied to the optical fiber element wire with a spherical pin having a diameter of 3 mm, a void occurs in the primary layer before peeling occurs between the bare wire part and the primary layer and before a crack occurs within the primary layer.

FIG. 1

EP 4 516 755 A1

**Description**

Technical Field

The present invention relates to an optical fiber element wire and a manufacturing method of an optical fiber ribbon.

Priority is claimed on United States Patent Application, Publication No. 63/335,224 filed in the United States on April 27, 2022, the content of which is incorporated herein by reference.

Background Art

Conventionally, an optical fiber element wire such as that described in Japanese Unexamined Patent Application, First Publication No. 2005-189390 is known. This optical fiber element wire includes a bare wire part having a core and a cladding, a primary layer covering the bare wire part, and a secondary layer covering the primary layer.

Summary of Invention

When an optical fiber element wire is manufactured, or when an optical fiber ribbon or an optical fiber cable is manufactured using the optical fiber element wire, a pressure (lateral pressure) in a radial direction may be applied to the optical fiber element wire. For example, when the drawn optical fiber element wire is wound around a bobbin, the optical fiber element wire may be sandwiched between a take-up belt and a capstan, or the optical fiber element wires may overlap each other. Therefore, a compressive force is applied to the optical fiber element wire. When the pressure as described above is applied to the optical fiber element wire, there is a likelihood that the bare wire part and the primary layer will peel apart, or that voids or cracks will occur within the primary layer. Occurrence of such peeling, voids, or cracks in the optical fiber element wire may result in an increase in transmission loss in the optical fiber element wire, and in an optical fiber ribbon or an optical fiber cable that uses the optical fiber element wire.

As a result of intensive studies, the inventors of the present application have found that, if voids have occurred within the primary layer, the voids disappear when the optical fiber element wire is heated. That is, the inventors of the present application have found that, even if voids have occurred within the optical fiber element wire, it is possible to suppress an increase in transmission loss of the optical fiber element wire by heating the optical fiber element wire. On the other hand, as a result of intensive studies of the inventors of the present application, it have found that, if peeling has occurred between the bare wire part and the primary layer, it is difficult to make the peeling disappear even if the optical fiber element wire is heated.

The present invention has been made in consideration of such circumstances, and an objective of the present invention is to provide an optical fiber element wire and a manufacturing method of an optical fiber ribbon in which transmission loss is less likely to increase.

In order to solve the above-described problems, an optical fiber element wire according to one aspect of the present invention includes a bare wire part including a core and a cladding and extending in an axial direction, a primary layer covering the bare wire part, and a secondary layer covering the primary layer, in which a Young's modulus of the primary layer is within a range of 0.10 to 0.45 MPa, a pull-out force required to pull the bare wire part out of the primary layer in the axial direction is within a range of 0.6 to 1.2 N/mm, and, when a point load is applied to the optical fiber element wire with a spherical pin having a diameter of 3 mm, a void occurs in the primary layer before peeling occurs between the bare wire part and the primary layer and before a crack occurs within the primary layer.

According to the above-described aspect of the present invention, it is possible to provide an optical fiber element wire and a manufacturing method of an optical fiber ribbon in which transmission loss is less likely to increase.

Brief Description of Drawings

FIG. 1 is a perspective view illustrating an optical fiber element wire according to the present embodiment.

FIG. 2 is a cross-sectional view taken along line II-II indicated by the arrow illustrated in FIG. 1.

FIG. 3 is a cross-sectional view taken along line III-III indicated by the arrow illustrated in FIG. 1, and is a view illustrating peeling, a void, and a crack.

FIG. 4 is a view illustrating an example of a method of measuring a Young's modulus of a primary layer.

Description of Embodiments

Hereinafter, an optical fiber element wire 1 according to the present embodiment will be described with reference to the drawings.

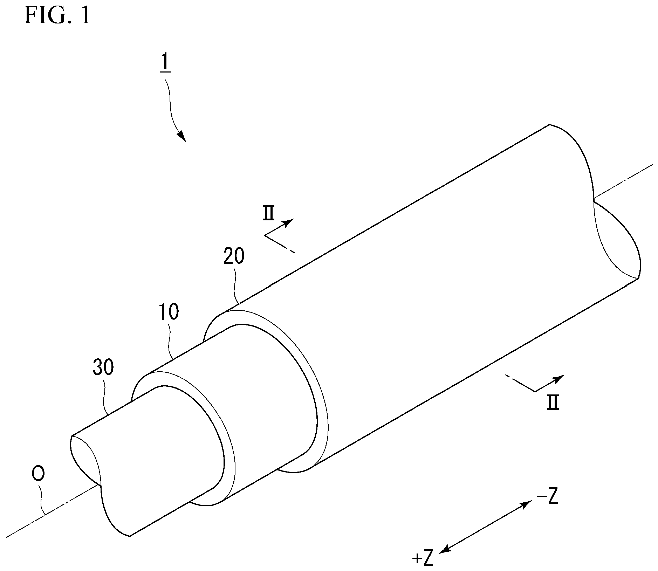

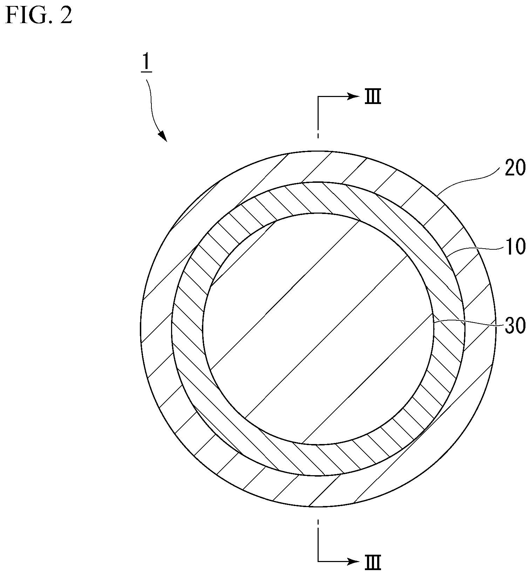

As illustrated in FIGS. 1 and 2, the optical fiber element wire 1 includes a bare wire part 30, a primary layer 10, and a secondary layer 20. A drawing speed when the optical fiber element wire 1 is drawn may be within a range of, for example, 1800 to 3000 m/min.

(Definition of directions)

Here, in the present embodiment, a direction parallel to a central axis O of the bare wire part 30 is referred to as a Z direction or an axial direction Z. A cross section perpendicular to the axial direction Z is referred to as a cross section. A direction orthogonal to the central axis O of the bare wire part 30 is referred to as a radial direction. A direction approaching the central axis O in the radial direction is referred to as a radially inward direction, and a direction away from the central axis O is referred to as a radially outward direction. A direction of revolving around the central axis O when viewed from the axial direction Z is referred to as a circumferential direction.

The bare wire part 30 extends in the axial direction Z. The bare wire part 30 includes a core and a cladding. The bare wire part 30 is formed of, for example, glass. In this case, the bare wire part 30 is also referred to as a glass part 30. A refractive index of the core is higher than a refractive index of the cladding. With this configuration, light is confined within the core, and the light propagates within the bare wire part 30 in the axial direction Z. An outer diameter of the bare wire part 30 is, for example, about 125 $\mu$m. However, the outer diameter of the bare wire part 30 may be 100 $\mu$m or less. Alternatively, the outer diameter of the bare wire part 30 may be 80 $\mu$m or less.

The primary layer 10 is also referred to as a first coating layer 10. The primary layer 10 extends in the axial direction Z. The primary layer 10 covers the bare wire part 30 from the outside in the radial direction. A material of the primary layer 10 is, for example, a UV curable acrylate resin. More specifically, as the material for the primary layer 10, a material with an appropriate combination of, for example, various monomers and oligomers such as urethane (meth) acrylate, epoxy (meth)acrylate, polyester acrylate, polyether, and polyamide, a UV-curable resin composition, reactive diluents, polymerization initiators suitable for these materials, silane coupling agents that enhance an adhesive strength with the bare wire part, and the like may be used. A Young's modulus of the primary layer 10 according to the present embodiment is within a range of 0.10 to 0.45 MPa. For example, if the outer diameter of the bare wire part 30 is about 125 $\mu$m and an outer diameter of the secondary layer 20 is 200 $\mu$m or less, a thickness of the primary layer 10 is about 11 to 22 $\mu$m (more preferably, 13 to 19 $\mu$m).

The secondary layer 20 is also referred to as a second coating layer 20. The secondary layer 20 extends in the axial direction Z. The secondary layer 20 covers the primary layer 10 from the outside in the radial direction. A material of the secondary layer 20 is, for example, a UV curable acrylate resin. More specifically, as the material for the secondary layer 20, a material with an appropriate combination of, for example, various monomers and oligomers such as urethane (meth)acrylate, epoxy (meth)acrylate, polyester acrylate, polyether, and polyamide, a UV-curable resin composition, reactive diluents, and polymerization initiators suitable for these materials may be used. A Young's modulus of the secondary layer 20 may be within, for example, a range of 750 to 2000 MPa (more preferably, 750 to 1400 MPa). A glass transition temperature of the secondary layer 20 may be within, for example, a range of 60 to 110°C (more preferably, 70 to 100°C). For example, when the outer diameter of the bare wire part 30 is about 125 $\mu$m and the outer diameter of the secondary layer 20 is 200 $\mu$m or less, the thickness of the primary layer 10 is about 11 to 22 $\mu$m (more preferably, 13 to 19 $\mu$m).

The primary layer 10 and the bare wire part 30 are chemically adhered. Therefore, a certain amount of force is required to pull the bare wire part 30 out of the primary layer 10 in the axial direction Z. Hereinafter, in the present specification, a magnitude of the force required to pull the bare wire part 30 out of the primary layer 10 in the axial direction Z may be referred to as a "pull-out force". More specifically, the pull-out force is defined as a magnitude of force required to pull the bare wire part 30 in the axial direction Z out of the primary layer 30 having a dimension of 1 mm in the axial direction Z. In the optical fiber element wire 1 according to the present embodiment, the pull-out force is within a range of 0.6 to 1.2 N/mm. The magnitude of the pull-out force depends on a strength of a chemical adhesive strength between the bare wire part 30 and the primary layer 10. Therefore, the magnitude of the pull-out force serves as an indicator of a magnitude of the adhesive strength between the bare wire part 30 and the primary layer 10.

Next, an operation of the optical fiber element wire 1 configured as above will be described.

When the optical fiber element wire 1 is manufactured or when an optical fiber ribbon or an optical fiber cable is manufactured using the optical fiber element wire 1, a pressure (lateral pressure) in the radial direction may be applied to the optical fiber element wire 1. For example, when the drawn optical fiber element wire 1 is wound around a bobbin, since the optical fiber element wires 1 overlap each other, a compressive stress is applied to the optical fiber element wire 1. Also, when the optical fiber element wire 1 is sandwiched between a substrate and a belt to pull out the optical fiber element wire 1, a compressive stress is also applied to the optical fiber element wire 1. In these cases, a tensile stress occurs in the optical fiber element wire 1 in a direction (axial direction Z) perpendicular to a direction in which the compressive stress acts.

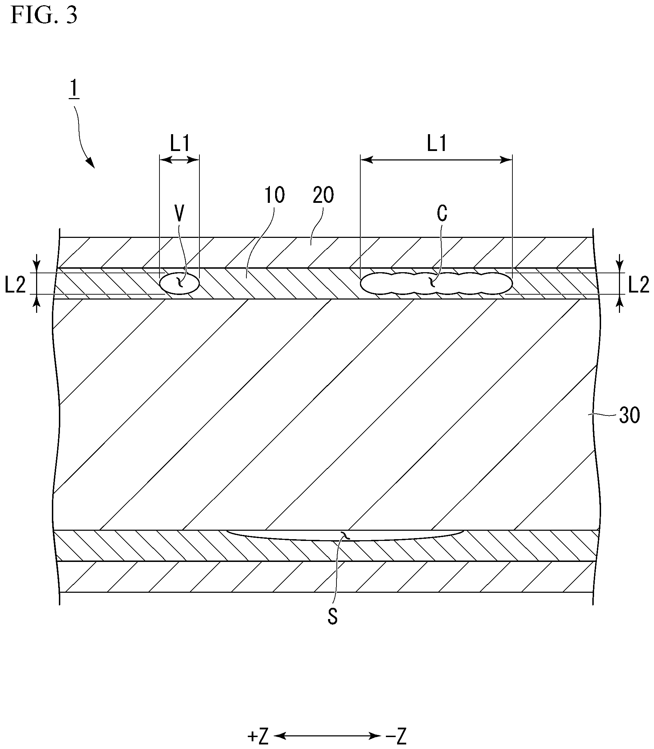

If the pressure as described above is applied to the optical fiber element wire 1, defects may occur in the primary layer 10 of the optical fiber element wire 1 (see FIG. 3). These defects occur due to both the stress applied to the optical fiber element wire 1 and a residual stress inherent in the optical fiber element wire 1 itself. The defects are classified into peeling, a void V, and a crack C. Peeling is a phenomenon in which the adhesion between the primary layer 10 and the bare wire part 30 is partially dissolved. When the peeling occurs, a gap S is generated between the primary layer 10 and the bare wire part 30 as illustrated in FIG. 3. The void V and the crack C are spaces that occur within the primary layer 10. That is, the void V and the crack C are not in contact with either the bare wire part 30 or the secondary layer 20. Therefore, even if the void V or the crack C occurs, the adhesive strength between the bare wire part 30 and the primary layer 10 is maintained. The crack C has a shape such that the void V is continuous in the longitudinal direction Z of the optical fiber 11.

In the present specification, the void V is defined as a space occurring within the primary layer 10 in which a dimension L1 in the axial direction Z is three times or less a dimension L2 in the radial direction. That is, for the void V, it holds that $L1 \leq 3 \times L2$. On the other hand, the crack C is defined as a space occurring within the primary layer 10 in which the dimension L1 in the axial direction Z is larger than three times the dimension L2 in the radial direction. That is, for the crack C, $L1 > 3 \times L2$ holds.

As described above, if a lateral pressure is applied to the optical fiber element wire 1, a local tensile stress is generated in the primary layer 10. If the tensile stress exceeds the adhesive strength between the bare wire part 30 and the primary layer 10, peeling occurs. On the other hand, if the constituent material of the primary layer 10 alleviates the applied stress, and microscopic spaces inherent within the primary layer 10 are pushed to extend, the void V may be formed within the primary layer 10. If the applied stress is too large, and the bare wire part 30 and the primary layer 10 are firmly adhered to each other, not only are the microscopic spaces inherent in the primary layer 10 pushed to extend, but the bonds may also be broken. The extension of the microscopic spaces accompanied by the breaking of the bonds becomes the crack C. Once peeling, the void V, or the crack C occurs, it does not disappear even after the applied stress is removed due to an influence of the residual stress.

Occurrence of peeling, the void V, or the crack C in the optical fiber element wire 1 may lead to an increase in transmission loss of the optical fiber element wire 1. This is because if peeling, the void V, or the crack C occurs within the optical fiber element wire 1, the primary layer 10 becomes non-uniform, which has adverse effects on the bare wire part 30 such as occurrence of bending. Particularly, if the optical fiber element wire 1 is cooled, the primary layer 10 becomes hard and contracts non-uniformly, making it likely to cause adverse effects such as occurrence of bending in the bare wire part 30. Thereby, the transmission loss of the optical fiber element wire 1 is more likely to increase.

As a result of intensive studies of the inventors of the present application, it have found that, for the optical fiber element wire 1 according to the present embodiment, if defects occurring in the primary layer 10 are the void V, the void V can be made to disappear by heating the optical fiber element wire 1. That is, the inventors of the present application have found that, even if the void V has occurred within the optical fiber element wire 1 according to the present embodiment, it is possible to suppress an increase in transmission loss of the optical fiber element wire 1 by heating the optical fiber element wire 1.

The void V disappearing due to heating is considered to be because an influence of the stress applied to the primary layer 10 and the residual stress inherent in the optical fiber element wire 1 are alleviated by heat. In addition, the residual stress, once alleviated, is not restored even when the optical fiber element wire 1 is cooled. Therefore, the void V that has disappeared due to heating does not reoccur even if the optical fiber element wire 1 is cooled.

On the other hand, as a result of intensive studies of the inventors of the present application, it have found that, if peeling or a crack occurs between the bare wire part 30 and the primary layer 10, the peeling or the crack does not disappear even if the optical fiber element wire 1 is heated. That is, the inventors of the present application have found that, if peeling or a crack occurs in the optical fiber element wire 1, it is difficult to suppress an increase in transmission loss of the optical fiber element wire 1.

The difficulty in making the peeling disappear is considered to be due to occurrence of peeling caused by breaking of chemical bonds between the primary layer 10 and the bare wire part 30. However, it is also conceivable that heating alleviates the residual stress in the primary layer 10, eliminates distortion in the primary layer 10, and thus makes it appear as if the peeling has disappeared. However, chemical bonds between the primary layer 10 and the bare wire part 30 have been broken in a portion in which peeling has occurred while chemical bonds between the primary layer 10 and the bare wire part 30 are maintained in a portion in which the peeling has not occurred. Therefore, when the optical fiber element wire 1 is cooled, uneven stress occurs between the primary layer 10 and the bare wire part 30, making bending more likely to occur in the bare wire part 30. Accordingly, it is difficult to suppress an increase in transmission loss of the optical fiber element wire 1. The difficulty in making the crack C disappear is considered to be because the crack C occurs accompanied by breaking of chemical bonds within the primary layer 10.

Here, in the optical fiber element wire 1 according to the present embodiment, the Young's modulus of the primary layer 10 is within the range described above, and the pull-out force is within the range described above. Due to the optical fiber element wire 1 having such a configuration, for example, when a point load is applied to the optical fiber element wire 1 with a spherical pin having a diameter of 3 mm, the void V occurs before peeling and the crack C occur within the optical fiber element wire 1.

As described above, even if a pressure such as a point load is applied to the optical fiber element wire 1 and the void V occurs within the optical fiber element wire 1, it is possible to make the void V to disappear by heating the optical fiber element wire 1. In other words, even if defects occur in the optical fiber element wire 1, the defects that have occurred are not peeling or the crack C that are not capable of being restored by heating, but rather the void V that is capable of being restored by heating. Therefore, it is possible to suppress an increase in transmission loss of the optical fiber element wire 1.

Note that, the Young's modulus of the primary layer 10, the pull-out force of the optical fiber element wire 1, and the like may be designed so that the void V disappears at a predetermined heating temperature and heating time. For example, the above-described Young's modulus, pull-out force, and the like may be set so that the void V disappears when the optical fiber element wire 1 is heated at 60°C for 3 minutes or more. Alternatively, the above-described Young's modulus, pull-out force, and the like may be set so that the void V that has disappeared once does not reoccur at a predetermined cooling temperature and cooling time. For example, the above-described Young's modulus, pull-out force, and the like may be set so that the void V does not reoccur even if the optical fiber element wire 1 is cooled at -40°C for 30 minutes or more.

An optical fiber ribbon may be manufactured by preparing a plurality of optical fiber element wires 1 according to the present embodiment. Note that, the term "optical fiber ribbon" refers to a tape-shaped (ribbon-shaped) member in which the plurality of optical fiber element wires 1 are arranged in a direction perpendicular to the axial direction Z and integrated together. When the optical fiber ribbon is manufactured using the optical fiber element wires 1, a coloring step and a ribbon forming step are performed. The coloring step is a step of providing a colored layer on the optical fiber element wire 1 using a coloring agent. The ribbon forming step is a step in which a ribbon forming material is applied to the plurality of optical fiber element wires 1, and the plurality of optical fiber element wires 1 are integrated into a ribbon shape by heating and curing the ribbon forming material. Note that, the ribbon forming material may be a plurality of connection parts that intermittently connect the plurality of optical fiber element wires 1 in the axial direction Z. The optical fiber ribbon in this case is a so-called intermittently-fixed optical fiber ribbon. Alternatively, the ribbon forming material may be a coating material that collectively covers the plurality of optical fiber element wires 1. Also, an optical fiber cable may be manufactured using the optical fiber element wires 1 according to the present embodiment. When an optical fiber cable is manufactured using the optical fiber element wires 1, a cabling step in which the optical fiber element wires 1 (optical fiber ribbon) are covered with an outer sheath material (sheath) is performed.

In these steps, heat is applied to the optical fiber element wires 1. That is, in the optical fiber ribbon or the optical fiber cable which is a final form of use, the optical fiber element wire 1 has a thermal history associated with manufacture of the optical fiber ribbon or manufacture of the optical fiber cable. Hereinafter, heat to which the optical fiber element wire 1 is subjected during manufacturing processes of the optical fiber ribbon and the optical fiber cable using the optical fiber element wire 1 will be specifically described.

The coloring agent used in the above-described coloring step and the ribbon forming material used in the above-described ribbon forming step are both a UV curable resin. In each of the coloring step and the ribbon forming step, a UV curable resin (coloring agent, ribbon forming material) is applied to the optical fiber element wires 1, and then the optical fiber element wires 1 are irradiated with light from a metal halide lamp or a UV LED to induce a cross-linking reaction. Thereby, formation of the colored layer or integration (ribbon forming) of the optical fiber element wires 1 are performed. Here, the inside of an ultraviolet lamp generally reaches a high temperature of several hundreds of degrees Celsius due to radiant heat. Therefore, the optical fiber element wires 1 are exposed to a high temperature inside the ultraviolet lamp both in the coloring step and in the ribbon forming step. Also, the cross-linking reaction is an exothermic reaction. Therefore, during curing, the optical fiber element wire 1 is wound around the bobbin in a high temperature state.

Also, a thermoplastic resin is used as the outer sheath material for the optical fiber cable. In the cabling step, the thermoplastic resin is heated to 120°C or higher to be processed. Therefore, the optical fiber element wire 1 housed within the heated thermoplastic resin is exposed to a high temperature.

Therefore, whether the optical fiber element wire 1 is productized as an optical fiber ribbon or the optical fiber element wire 1 is productized as an optical fiber cable, the optical fiber element wire 1 is exposed to a high temperature. Therefore, there is a high likelihood that the optical fiber element wire 1, which has been productized as an optical fiber ribbon or an optical fiber cable, has a thermal history equivalent to, for example, about 60°C for three minutes. According to the optical fiber element wire 1 of the present embodiment, it is also possible to make the void V disappear by utilizing the heat during each of the above-described steps in the manufacture of the optical fiber ribbon and the manufacture of the optical fiber cable.

Examples

Hereinafter, the above-described embodiment will be described using specific examples. Note that, the present invention is not limited to the following examples.

A total of 16 optical fiber element wires consisting of examples 1 to 9 and comparative examples 1 to 7 were prepared. Examples 1 to 9 are the optical fiber element wires 1 described in the above-described embodiment. Examples 1 to 9 and comparative examples 1 to 7 differ from one another in outer diameter of the optical fiber element wire, outer diameter of the primary layer, Young's modulus of the primary layer, Young's modulus of the secondary layer, and pull-out force. Table 1 is a table in which examples 1 to 9 and comparative examples 1 to 7 are summarized. In each of examples 1 to 9 and comparative examples 1 to 7, a glass transition temperature of the secondary layer was 85°C and a drawing speed during drawing was 2500 m/min. The glass transition temperature was measured by a dynamic mechanical analysis (DMA) at 1 Hz.

[Table 1]

| | Outer diameter of optical fiber element wire [μm] | Outer diameter of primary layer [μm] | Young's modulus of primary layer [MPa] | Young's modulus of secondary layer [MPa] | Pull-out force [N/mm] | Form of defect |
|---|---|---|---|---|---|---|
| Example 1 | 185 | 150 | 0.1 | 1200 | 0.8 | Void |
| Example 2 | 185 | 150 | 0.17 | 1200 | 0.85 | Void |
| Example 3 | 185 | 150 | 0.25 | 1200 | 0.88 | Void |
| Example 4 | 193 | 157 | 0.11 | 1200 | 0.75 | Void |
| Example 5 | 193 | 157 | 0.17 | 1200 | 0.78 | Void |
| Example 6 | 193 | 157 | 0.25 | 1200 | 0.83 | Void |
| Example 7 | 203 | 165 | 0.17 | 1200 | 0.79 | Void |
| Example 8 | 193 | 159 | 0.45 | 1200 | 0.9 | Void |
| Example 9 | 193 | 157 | 0.17 | 1200 | 0.6 | Void |
| Comparative example 1 | 185 | 150 | 0.08 | 1250 | 0.7 | Crack |
| Comparative example 2 | 193 | 157 | 0.08 | 1250 | 0.75 | Crack |
| Comparative example 3 | 185 | 150 | 0.17 | 1250 | 0.3 | Peeling |
| Comparative example 4 | 193 | 157 | 0.16 | 1250 | 0.25 | Peeling |
| Comparative example 5 | 193 | 162 | 0.16 | 1250 | 0.55 | Peeling |
| Comparative example 6 | 193 | 159 | 0.6 | 1250 | 0.97 | Peeling |
| Comparative example 7 | 239 | 190 | 0.6 | 750 | 0.8 | Peeling |

The Young's modulus of the primary layer was measured in a state of the optical fiber element wire, that is, in a state in which the primary layer, together with the bare wire part and the secondary layer, forms the optical fiber element wire. The Young's modulus of the primary layer was measured in a shear mode.

Similarly, the Young's modulus of the secondary layer was measured in a state of the optical fiber element wire. The Young's modulus of the secondary layer was measured in a tensile mode by separating the coating material from the optical fiber element wire.

The pull-out force was calculated on the basis of a maximum force required to pull the bare wire part out of the primary layer, which has a dimension of 5 mm in the axial direction Z, at a speed of 3 mm/min in the axial direction Z.

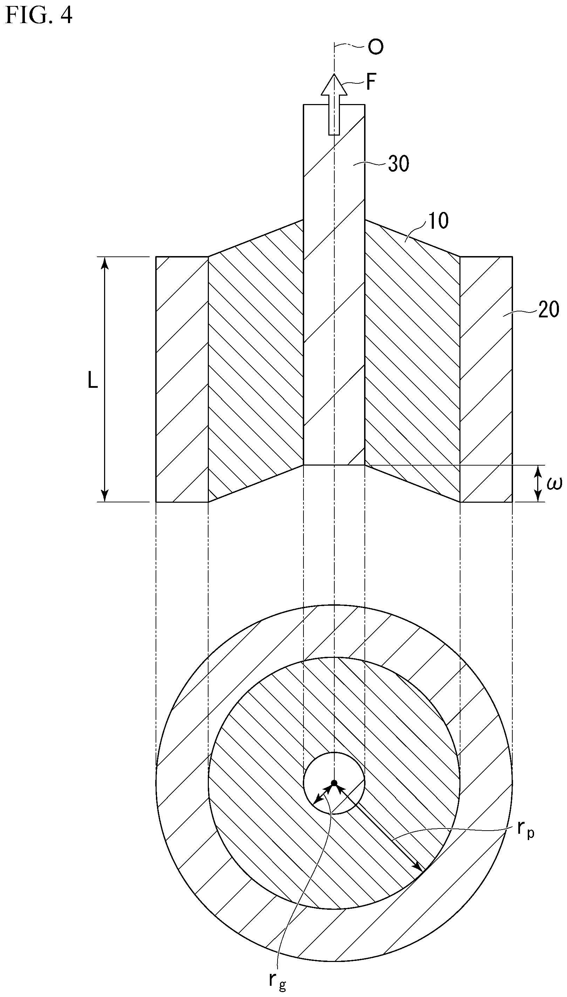

Note that, the Young's modulus (shear mode) of the primary layer was measured, more specifically, by a TMA method in an environment of 25°C. That is, as illustrated in FIG. 4, the bare wire part was exposed while leaving parts of the primary layer and the secondary layer. Thereafter, the secondary layer was fixed, the bare wire part was pulled in the axial direction, and a tensile load and an amount of displacement of the bare wire part were measured. Provided that the tensile load is F and the amount of displacement of the bare wire part is $\omega$, it is possible to determine a Young's modulus G of the primary layer by the following mathematical expression (1). Note that, in mathematical expression (1), rg is a radius of the bare wire part, rp is a radius of the primary layer, and L is a length of the secondary layer in the axial direction (see FIG. 4).
[Math. 1]

$$G = \frac{3F}{4\pi L \omega} \ln \frac{r_p}{r_g} \quad \cdots \quad (1)$$

The following experiment was conducted for the 16 optical fiber element wires shown in Table 1. That is, a point load was applied to each of the optical fiber element wires using a spherical pin with a diameter of 3 mm to cause defects in the primary layer. More specifically, the above-described spherical pin was brought into contact with the secondary layer and moved radially inward at a speed of 1 mm/min to apply a load of 1.0 to 3.0 N to the secondary layer. A magnitude of the load applied by the spherical pin was appropriately adjusted within the above-described range in order to cause defects in the primary layer while the secondary layer was not destroyed.

Further, defects occurring within the primary layer were observed, and the defects were classified into peeling, the void V, and the crack C. The defects were observed by immersing each optical fiber element wire in a matching oil and then observing the immersed optical fiber element wire under a microscope. Results of the classification are shown in the rightmost column of Table 1.

The above-described experiment was conducted within 7 days after the optical fiber element wire was drawn. From the drawing to the start of the experiment, each of the optical fiber element wires was stored in an environment with a temperature of 20 to 26°C and a humidity (relative humidity, RH) of 40 to 60%.

As shown in Table 1, in the optical fiber element wires according to examples 1 to 9 (the optical fiber element wire 1 of the above-described embodiment), the Young's modulus of the primary layer is in a range of 0.10 to 0.45 MPa, and the pull-out force is in a range of 0.60 to 0.90 N/mm. Then, in the optical fiber element wires according to examples 1 to 9, defects occurred were in a form of the void V. In other words, in the optical fiber element wires according to examples 1 to 9, if the magnitude of the load by the spherical pin is gradually increased, the void V occurs before peeling and the crack C occur.

As described above, it is possible to make the void V to disappear by heating. Therefore, in the optical fiber element wires according to examples 1 to 9, it is possible to suppress an increase in transmission loss of the optical fiber element wire by heating the optical fiber element wire.

Occurrence of the crack C in the optical fiber element wires according to comparative examples 1 and 2 is considered to be due to the low Young's modulus of the primary layer. More specifically, in the optical fiber element wires according to comparative examples 1 and 2, the Young's modulus of the primary layer is less than 0.10 MPa. It is considered that, if the Young's modulus of the primary layer is low, the primary layer tends to be torn, and therefore the crack C is likely to occur.

Conversely, in the optical fiber element wires according to examples 1 to 9, it is considered that the Young's modulus of the primary layer is 0.10 MPa or more, which is large to some extent, and therefore the crack C is less likely to occur. That is, it is considered that, in the optical fiber element wire in which the Young's modulus of the primary layer is large to some extent, the void V occurs before the crack C occurs.

In the optical fiber element wires according to comparative examples 3 to 7, peeling has occurred. Hereinafter, a cause of peeling will be considered for each of the comparative examples.

In the optical fiber element wires according to comparative examples 3 to 5, the pull-out force is smaller than that of the optical fiber element wire 1 according to the present embodiment. More specifically, in the optical fiber element wires according to comparative examples 1 and 2, the pull-out force is less than 0.6 N/mm. It is considered that, if the pull-out force is weak, the chemical adhesive strength between the primary layer and the bare wire part is weak, and therefore the adhesion between the primary layer and the bare wire part is likely to be dissolved, making peeling more likely to occur.

Conversely, in the optical fiber element wires according to examples 1 to 9, the pull-out force is 0.6 N/mm or more, which is sufficiently large. Therefore, it is considered that the adhesion between the primary layer and the bare wire part is less likely to be dissolved, and peeling is less likely to occur. That is, it is considered that, in the optical fiber element wire in which the pull-out force is sufficiently large, the void V occurs before peeling occurs. Therefore, also for, for example, the optical fiber element wire with the pull-out force of 1.2 N/mm, it is naturally expected that the void V will occur before peeling will occur, similarly to the optical fiber element wires according to examples 1 to 9.

In the optical fiber element wires according to comparative examples 6 and 7, the Young's modulus of the primary layer is higher than that of the optical fiber element wire 1 according to the present embodiment. More specifically, in the optical fiber element wires according to comparative examples 6 and 7, the Young's modulus of the primary layer is higher than 0.45 MPa. It is considered that, if the Young's modulus of the primary layer is high, the primary layer is strong, and therefore tearing is less likely to occur within the primary layer. Therefore, it is possible to be considered that the void V caused by tearing in the primary layer is relatively less likely to occur than peeling caused by dissolution of the adhesion between the primary layer and the bare wire part. That is, it is considered that, if the Young's modulus of the primary layer is high, peeling occurs before the void V occurs.

Conversely, in the optical fiber element wires according to examples 1 to 9, it is considered that the Young's modulus of the primary layer is 0.45 MPa or less, which is low to some extent, and therefore the void V is more likely to occur than peeling. That is, it is considered that, in the optical fiber element wire in which the Young's modulus of the primary layer is low to some extent, the void V occurs before peeling occurs.

As described above, the optical fiber element wire 1 according to the present embodiment includes the bare wire part 30 including a core and a cladding and extending in the axial direction Z, the primary layer 10 covering the bare wire part 30, and the secondary layer 20 covering the primary layer 10, in which the Young's modulus of the primary layer 10 is within a range of 0.10 to 0.45 MPa, the pull-out force required to pull the bare wire part 30 out of the primary layer 10 in the axial direction Z is within a range of 0.6 to 1.2 N/mm, and, when a point load is applied to the optical fiber element wire 1 with a spherical pin having a diameter of 3 mm, the void V occurs in the primary layer 10 before peeling occurs between the bare wire part 30 and the primary layer 10 and before the crack C occurs within the primary layer 10.

According to this configuration, even if defects occur in the optical fiber element wire 1 due to a pressure, the defects occurring are not peeling or a crack that is not capable of being restored by heating, but rather the void V that is capable of being restored by heating. Therefore, it is possible to suppress an increase in transmission loss of the optical fiber element wire 1.

Also, the Young's modulus of the secondary layer 20 is within the range of 750 to 2000 MPa. Even in this case, it is possible to make peeling less likely to occur by setting the Young's modulus of the primary layer 10 and the pull-out force of the optical fiber element wire 1 within the range described above.

Also, a manufacturing method of the optical fiber ribbon according to the present embodiment involves preparing the plurality of optical fiber element wires 1 described above, applying a ribbon forming material to the plurality of optical fiber element wires 1, and integrating the plurality of optical fiber element wires 1 into a ribbon shape by heating and curing the ribbon forming material. According to this configuration, the void V disappears when heat is applied to the optical fiber element wires 1, and it is possible to suppress an optical fiber ribbon in which transmission loss is suppressed.

Note that, the technical scope of the present invention is not limited to the above-described embodiment, and various modifications may be made in a range not departing from the spirit of the present invention.

For example, the optical fiber element wire 1 may have three or more coating layers. That is, yet another coating layer may be provided around the secondary layer (second coating layer) 20. Also, in order to ensure the adhesive strength between the bare wire part 30 and the primary layer 10, an adhesive layer may be provided between the bare wire part 30 and the primary layer 10.

In addition, the components in the above-described embodiment may be appropriately replaced with well-known components within a range not departing from the spirit of the present invention, and the embodiment and modified examples described above may be appropriately combined.

Reference Signs List

1 Optical fiber element wire
10 Primary layer
20 Secondary layer
30 Bare wire part
V Void
V1 Point-like void
V2 Linear void
Z Axial direction

**Claims**

1. An optical fiber element wire comprising:

   a bare wire part including a core and a cladding and extending in an axial direction;
   a primary layer covering the bare wire part; and
   a secondary layer covering the primary layer, wherein
   a Young's modulus of the primary layer is within a range of 0.10 to 0.45 MPa,
   a pull-out force required to pull the bare wire part out of the primary layer in the axial direction is within a range of 0.6 to 1.2 N/mm, and

when a point load is applied to the optical fiber element wire with a spherical pin having a diameter of 3 mm, a void occurs in the primary layer before peeling occurs between the bare wire part and the primary layer and before a crack occurs within the primary layer.

2. The optical fiber element wire according to claim 1, wherein a Young's modulus of the secondary layer is within a range of 750 to 2000 MPa.

3. The optical fiber element wire according to claim 1 or 2, wherein even if a void has occurred in the primary layer due to application of a point load, the void disappears when the optical fiber element wire is heated at 60°C for 3 minutes or more.

4. The optical fiber element wire according to any one of claims 1 to 3, wherein

   the void disappears when the optical fiber element wire is heated even if the void has occurred in the primary layer due to application of a point load, and
   even if the heated optical fiber element wire is cooled at -40°C for 30 minutes or more, the void that has disappeared due to heating does not reoccur.

5. A manufacturing method of an optical fiber ribbon comprising:

   preparing a plurality of the optical fiber element wires according to any one of claims 1 to 4;
   applying a ribbon forming material to the plurality of optical fiber element wires; and
   integrating the plurality of optical fiber element wires into a ribbon shape by heating and curing the ribbon forming material.

FIG. 1

FIG. 2

FIG. 3

+Z ←——————→ −Z

FIG. 4

## INTERNATIONAL SEARCH REPORT

| International application No. |
|---|
| **PCT/JP2023/015622** |

**A. CLASSIFICATION OF SUBJECT MATTER**

*C03C 25/1065*(2018.01)i; *G02B 6/44*(2006.01)i
FI: C03C25/1065; G02B6/44 301A

According to International Patent Classification (IPC) or to both national classification and IPC

**B. FIELDS SEARCHED**

Minimum documentation searched (classification system followed by classification symbols)

C03C25/00-25/70; G02B6/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-189390 A (FUJIKURA LTD) 14 July 2005 (2005-07-14)<br>entire text, all drawings | 1-5 |
| A | JP 11-202174 A (FUJIKURA LTD) 30 July 1999 (1999-07-30)<br>entire text, all drawings | 1-5 |
| A | US 2019/0338161 A1 (CORNING INCORPORATED) 07 November 2019 (2019-11-07)<br>entire text, all drawings | 1-5 |
| A | JP 2007-333795 A (FURUKAWA ELECTRIC CO LTD) 27 December 2007 (2007-12-27)<br>entire text, all drawings | 1-5 |
| A | JP 2004-341297 A (HITACHI CABLE LTD) 02 December 2004 (2004-12-02)<br>entire text, all drawings | 1-5 |
| A | JP 63-161416 A (MITSUBISHI CABLE IND LTD) 05 July 1988 (1988-07-05)<br>entire text, all drawings | 1-5 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/015622**

### C. DOCUMENTS CONSIDERED TO BE RELEVANT

| Category* | Citation of document, with indication, where appropriate, of the relevant passages | Relevant to claim No. |
|---|---|---|
| A | WO 01/35143 A1 (SUMITOMO ELECTRIC INDUSTRIES, LTD) 17 May 2001 (2001-05-17) <br> entire text, all drawings | 1-5 |

Form PCT/ISA/210 (second sheet) (January 2015)

INTERNATIONAL SEARCH REPORT
Information on patent family members

International application No.

**PCT/JP2023/015622**

| Patent document cited in search report | | | Publication date (day/month/year) | Patent family member(s) | | | Publication date (day/month/year) |
|---|---|---|---|---|---|---|---|
| JP | 2005-189390 | A | 14 July 2005 | (Family: none) | | | |
| JP | 11-202174 | A | 30 July 1999 | (Family: none) | | | |
| US | 2019/0338161 | A1 | 07 November 2019 | WO | 2019/213367 | A1 | |
| | | | | entire text, all drawings | | | |
| | | | | CN | 112074493 | A | |
| | | | | KR | 10-2021-0003899 | A | |
| JP | 2007-333795 | A | 27 December 2007 | US | 2008/0131062 | A1 | |
| | | | | entire text, all drawings | | | |
| | | | | EP | 2028514 | A1 | |
| | | | | CN | 101341432 | A | |
| JP | 2004-341297 | A | 02 December 2004 | (Family: none) | | | |
| JP | 63-161416 | A | 05 July 1988 | (Family: none) | | | |
| WO | 01/35143 | A1 | 17 May 2001 | US | 6810188 | B1 | |
| | | | | entire text, all drawings | | | |
| | | | | EP | 1227350 | A1 | |
| | | | | KR | 10-2002-0059683 | A | |
| | | | | CN | 1378655 | A | |

Form PCT/ISA/210 (patent family annex) (January 2015)

## REFERENCES CITED IN THE DESCRIPTION

**Patent documents cited in the description**

- US 63335224
- JP 2005189390 A